# EUROPÄISCHE PATENTSCHRIFT

(11) **EP 1 151 653 B1**
(45) Veröffentlichungstag und Bekanntmachung des Hinweises auf die Patenterteilung: **30.06.2004**
(21) Anmeldenummer: 01108976.0
(22) Anmeldetag: 11.04.2001
(51) Int. Cl.: A01D 43/08

(54) **Erntemaschine, insbesondere selbstfahrender Feldhäcksler**
Harvester especially self-propelled forage harvester
Récolteuse en particulier faucheuse-hacheuse

(30) Priorität: 04.05.2000 DE 10021660
(43) Veröffentlichungstag der Anmeldung: 07.11.2001
(73) Patentinhaber: Maschinenfabrik Bernard Krone GmbH, 48480 Spelle (DE)
(72) Erfinder: Krone, Bernard Dr.-Ing.E.h., 48480 Spelle (DE); Horstmann, Josef, 49479 Ibbenbüren (DE); Keller, Alfons, 49497 Mettingen (DE)
(74) Vertreter: Busse & Busse Patentanwälte

(56) Entgegenhaltungen:
- EP-A- 0 492 195
- DE-A- 19 802 199
- FR-A- 2 518 362
- FR-A- 2 622 945
- US-A- 5 177 888

## Beschreibung

Die Erfindung betrifft eine Erntemaschine nach dem Oberbegriff des Anspruchs 1, die Erntegut mit einer Einzugeinrichtung aufnimmt und ggf. nach Durchlaufen von Bearbeitungsschritten über einen Auswurfschacht in einen Laderaum abgibt.

Insbesondere selbstfahrende Feldhäcksler zum Aufnehmen und Häckseln von Mais, Gras, Grünfutter und dgl. Erntegut sind meist zum Ernten großer Mengen von Erntegut ausgelegt, das daher nicht mehr in der Erntemaschine selbst aufgenommen und transportiert werden kann. Die Abgabe des Ernteguts erfolgt deshalb in den Laderaum eines Anhängers, der je nach Einsatz der Maschine an die Erntemaschine selbst oder einen diesen begleitenden Schlepper angehängt werden kann. Während im ersten Fall die Abgabe des Erntegutes über den Auswurfschacht in den Bereich hinter die Erntemaschine erfolgt, wird das Erntegut im letztgenannten Fall zur Seite in den Anhänger des neben der Erntemaschine fahrenden Schleppers abgegeben. Da der Schlepper über bereits abgeernteten Bereich fahren sollte, befindet sich dieser nach einem Wendevorgang der Erntemaschine auf deren anderer Seite. Damit der Auswurf des Erntegutes zu beiden Seiten oder auch nach hinten möglich ist, ist der Auswurfschacht motorisch verschwenkbar ausgelegt.

Um eine Beschädigung des Auswurfschachts und dessen Antriebsmotors zu verhindern, wenn der Auswurfschacht im Betrieb, z.B. mit dem Geäst von Hecken, nahe der Erntefläche stehenden Bäumen oder Strommasten kollidiert, ist der Auswurfschacht gegenüber dem ihm zugeordneten Antriebsmotor mittels einer Überlastkupplung auskuppelbar. Eine mit einer derartigen, sogenannten Anfahrsicherung ausgestattete gattungsgemäße Erntemaschine ist in der EP 0 492 195 B1 beschrieben. Der Verschwenkantrieb dieser Erntemaschine erfolgt über ein motorseitiges Antriebselement, eine Antriebsschnecke, die auf ein schachtseitiges Antriebselement, einen fest mit dem Auswurfschacht verbundenen Zahnkranz wirkt. Motor und Antriebsschnecke sind dabei gegen den Druck einer Feder verschwenkbar angeordnet, so daß bei Anschlagen des Auswurfschachtes an ein Hindernis die Antriebsschnecke aus dem Eingriff mit dem Zahnkranz herausgedrückt wird und ausschwenkt. Damit die Antriebsschnecke nicht über mehrere Zähne des Zahnkranzes reibt, wird die ausgeschwenkte Position von Motor und Antriebsschnecke automatisch über eine Sperrklinke arretiert, die anschließend vom Fahrer der Erntemaschine wieder gelöst werden muß.

Diese Anordnung hat den Nachteil, daß die Verzahnung zwischen Antriebsschnecke und Zahnkranz im Fall des Auskuppelns einem hohen Verschleiß ausgesetzt ist. Auch ist, um ein Auskuppeln zu ermöglichen, eine spezielle Geometrie der Zähne des Zahnkranzes und der Antriebsschnecke nötig. Zudem ist es lästig, daß der Fahrer der Erntemaschine nach dem Anschlagen und Auskuppeln des Auswurfschachtes von Hand die Sperrklinke lösen muß, um den Auswurfschacht wieder in seine ursprüngliche Position zu bringen.

Der Erfindung liegt daher die Aufgabe zugrunde, eine Erntemaschine mit konstruktiv und hinsichtlich ihrer Bedienerfreundlichkeit verbesserter Anfahrsicherung anzugeben.

Diese Aufgabe wird erfindungsgemäß durch eine Erntemaschine mit den Merkmalen des Anspruchs 1 gelöst.

Indem die Überlastkupplung nicht wie bei der gattungsgemäßen Erntemaschine zwischen dem motorseitigen und dem schachtseitigen Antriebselement, sondern zwischen dem schachtseitigen Antriebselement und dem Auswurfschacht angeordnet wird, können das motorseitige und das schachtseitige Antriebselement stets im Eingriff verbleiben und die Gestaltung der Antriebsgeometrie kann daher optimal auf die Antriebsfunktion ausgelegt werden, ohne eine eventuelle Auskuppelbarkeit berücksichtigen zu müssen. Auch ist es bei der erfindungsgemäßen Erntemaschine insoweit nicht notwendig, den Antriebsmotor für den Auswurfschacht selbst verschwenkbar anzuordnen. Es kann daher eine aus Stabilitätsgründen und zur sicheren Übertragung der Antriebsleistung günstigere starre Anordnung gewählt werden. Schließlich ist es bei Anordnung der Überlastkupplung erst zwischen dem schachtseitigen Antriebselement und dem Auswurfschacht nicht nötig, die ausgekuppelte Position durch eine Sperrklinke zu arretieren, da keine Antriebselemente, z.B. Zähne des Zahnkranzes gegen übermäßigen Verschleiß durch mehrmaliges Ein- und Auskuppeln beim Reiben der Antriebsschnecke über mehrere Zähne des Zahnkranzes geschützt werden müssen. Damit erübrigt sich bei der erfindungsgemäßen Ausgestaltung auch das Lösen einer Sperrposition von Hand.

Weitere Vorteile und Einzelheiten der Erfindung ergeben sich aus den Unteransprüchen und einem in den Zeichnungen dargestellten Ausführungsbeispiel der Erfindung, das im folgenden erläutert wird; es zeigen:
- Fig. 1: eine Ansicht von oben auf eine Erntemaschine im Ernteeinsatz,
- Fig. 2: den Bereich II aus Fig. 1 in vergrößerter, perspektivischer Seitenansicht mit eingekuppeltem Auswurfschacht,
- Fig. 3: den Gegenstand aus Fig. 2 beim Auskuppeln des Auswurfschachtes,
- Fig. 4: den Gegenstand aus Fig. 2 mit vollständig ausgekuppeltem Auswurfschacht,
- Fig. 5: den Gegenstand aus Fig. 2 beim Wiedereinkuppeln des Auswurfschachtes und
- Fig. 6: den Gegenstand aus Fig. 2 mit wieder eingekuppeltem Auswurfschacht.

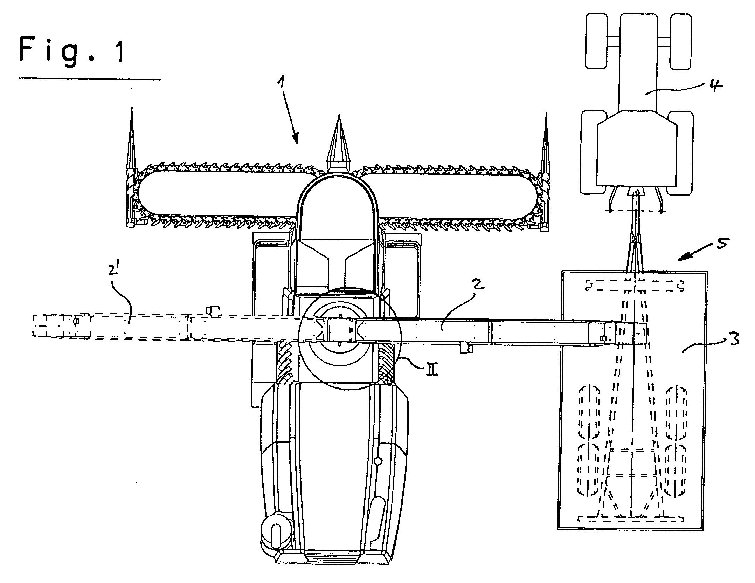

Die in Fig. 1 dargestellte Erntemaschine verfügt über eine Einzugeinrichtung 1, bei der dargestellten Ausführungsform in Form eines Maisgebisses, die die Aufnahme des Ernteguts ermöglicht. Dieses wird in der Erntemaschine z.B. gehäckselt und dann über einen Auswurfschacht 2 in den Laderaum (3) eines an einen Schlepper 4 angehängten Anhängers 5 abgegeben. Mit vollen Linien ist in Fig. 1 eine nach rechts geschwenkte Position des Auswurfschachtes 2 gezeigt, während eine entgegengesetzte, nach links geschwenkte Position (2') mit gestrichelten Linien angedeutet ist.

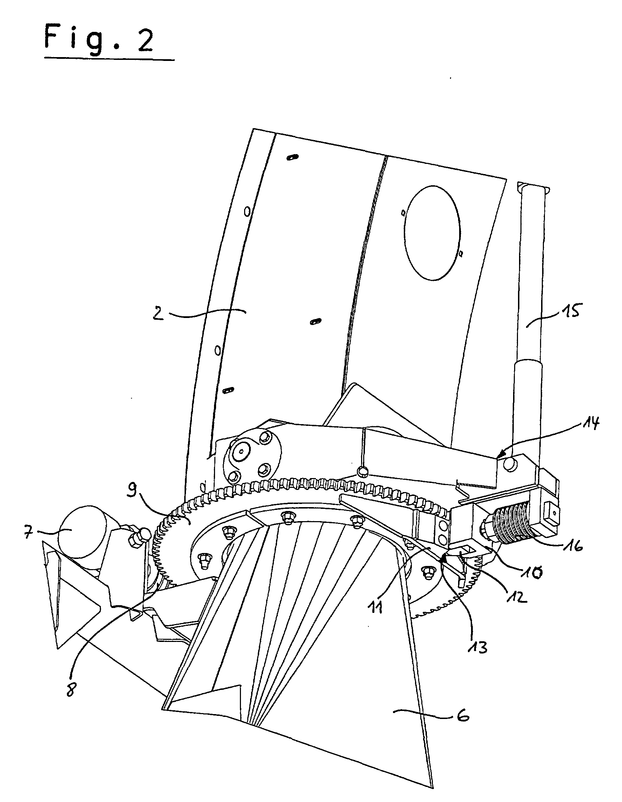

In Fig. 2 ist im Detail der Übergangsbereich zwischen dem verschwenkbaren Auswurfschacht 2 und dem mit der Erntemaschine starr verbundenen feststehenden Auswurfkanalabschnitt 6 dargestellt. Mit dem feststehenden Auswurfkanalabschnitt 6 ist maschinenseitig ein Schwenkmotor 7 verbunden, der ein als Antriebsschnecke 8 ausgebildetes motorseitiges Antriebselement antreibt. Die Antriebsschnecke 8 greift in ein schachtseitiges Antriebselement ein, das beim Ausführungsbeispiel die Form eines Zahnkranzes 9 hat. Andere Antriebselemente, wie z.B. Riemen und Riemenscheibe sind ebenfalls möglich. Auch umfaßt ein motorischer Antrieb im Sinne der Erfindung ebenfalls z.B. Antriebe über Hydraulikzylinder, Klinkenradantriebe etc..

Der Zahnkranz 9 ist mit dem Auswurfschacht 2 über eine Überlastkupplung verbunden. Die Überlastkupplung weist als Kupplungsglieder schachtseitige und antriebselementseitige Rastglieder 10, 11 auf, wobei das schachtseitige Rastglied 10 einen Rastvorsprung 12 und das antriebselementseitige Rastglied 11 eine Rastausnehmung 13 aufweist. Das schachtseitige Rastglied 10 ist mit dem Schacht 2 über einen an diesen angeschweißten Winkel 14 fest verbunden, an dem auch die Abstützung 15 für den oberen Bereich des Auswurfschachts 2 angreift. Die Abstützung 15 ist hydraulisch längenverstellbar und dient gleichzeitig der Neigungsverstellung des Auswurfschachts 2. Die Zusamemnfassung der Befestigung der Abstützung 15 mit der des schachtseitigen Rastglieds 10 ist über den Winkel 14 in einer konstruktiv günstigen, kompakten Einheit verwirklicht. Während das schachtseitige Rastglied 10 mit dem Auswurfschacht 2 verbunden ist, steht das antriebselementseitige Rastglied 11 hingegen in fester Verbindung mit dem Zahnkranz 9. Im eingekuppelten Zustand greifen Rastvorsprung 12 und Rastausnehmung 13 ineinander, wobei der Rastvorsprung 12 über eine Druckfeder 16 gegen die Rastausnehmung 13 vorgespannt ist. Konstruktiv ist diese Art, die Überlastkupplung auszubilden, besonders einfach und stabil, wobei die gewünschte Haltekraft der Kupplung durch die Wahl der Druckfeder 16 bzw. deren Vorspannung einstellbar ist.

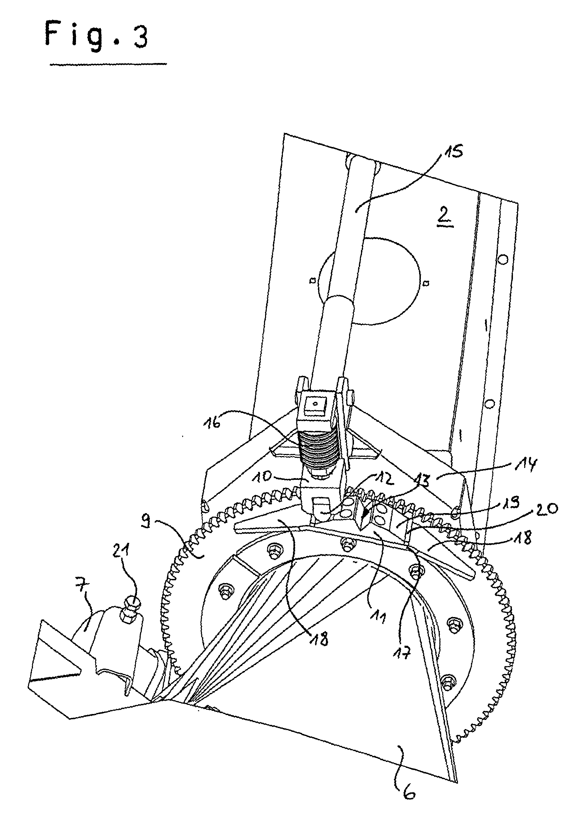

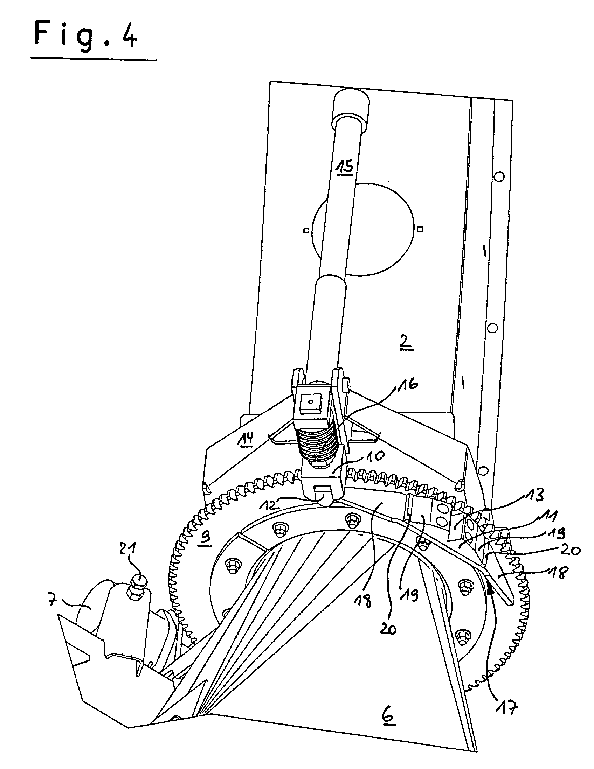

Für den Fall, daß der Auswurfschacht 2 im Betrieb der Erntemaschine an ein Hindernis anschlägt, wird durch diese Kraft der Rastvorsprung 12 aus der Rastausnehmung 13 herausgedrückt und in die in Fig. 3 dargestellte, entkuppelte Position gebracht. Die Verbindung zwischen dem Auswurfschacht 2 und dem Zahnkranz 9 ist dadurch gelöst und der Auswurfschacht kann bei stehendem Zahnkranz 9 beispielsweise in die in Fig. 4 dargestellte Position weiterschwenken.

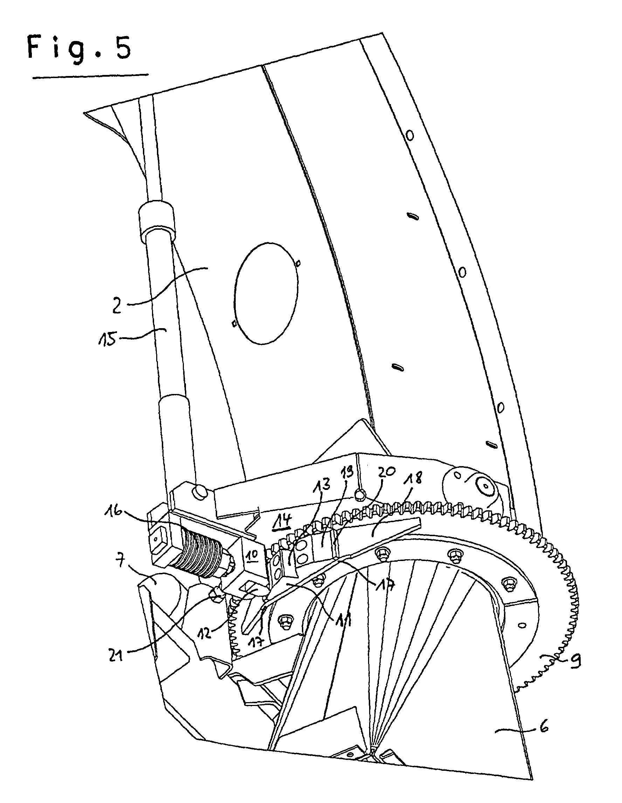

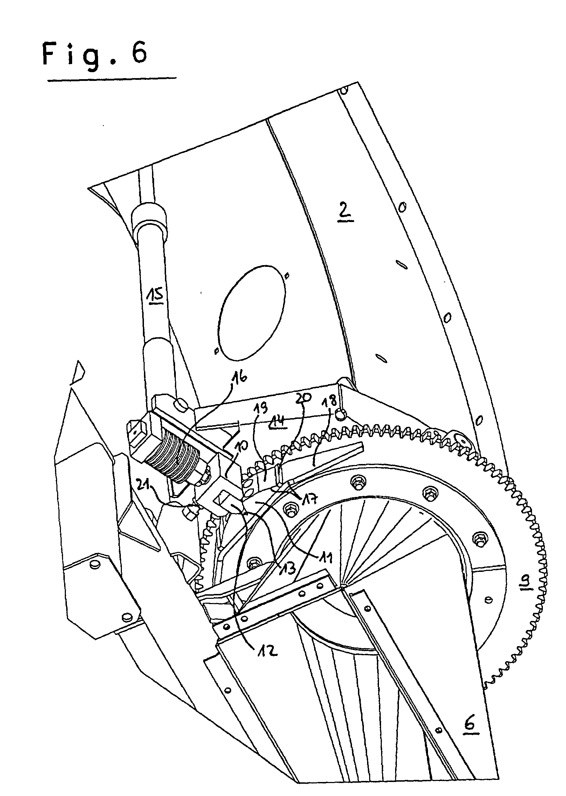

Wenn der Auswurfschacht 2 wieder eingekuppelt und in eine definierte Position gebracht werden soll, wird über den Schwenkmotor 7 und die Antriebsschnecke 8 der Zahnkranz 9 verdreht, bis der Rastvorsprung 12 auf einer Aufgleitrampe 17 zu einer der beiden Seiten der Rastausnehmung 13 aufgleitet. Bevorzugt weist jede Aufgleitrampe 17 zwei Bereiche 18, 19 mit verschiedenen Neigungswinkeln auf. Der Rastvorsprung 12 gleitet dann zunächst auf den Bereich 12 mit flacherem Neigungswinkel auf. Der Bereich mit steilerem Neigungswinkel 19, der sich näher an der Rastausnehmung 13 befindet ist in seiner Steigung so ausgelegt, daß der Rastvorsprung 12 und damit der Auswurfschacht 2 von diesem Bereich 19 des antriebsseitigen Rastgliedes 11 mit dem Zahnkranz 9 mitgenommen wird. Noch definierter kann diese Mitnahme dadurch erreicht werden, daß zwischen den beiden Bereichen 18, 19 der Aufgleitrampe 17 ein Mitnahmevorsprung 20 für den Rastvorsprung 12 angeordnet ist. Über diesen wird das schachtseitige Rastglied 10 dann bis an einen in der Nähe des Schwenkmotors 7 fest angeordneten Anschlag 21 herangeführt, der den Rastvorsprung 12 dann wie in Fig. 5 dargestellt über den Mitnahmevorsprung 20 herüber in die in Fig. 6 dargestellte Position wieder in die Rastausnehmung hineindrückt. In dieser Stellung sind Auswurfschacht 2 und der Schwenkantrieb wieder kupplungsmäßig verbunden und der Auswurfschacht 2 kann über den Schwenkmotor 7, die Antriebsschnecke 8 und den Zahnkranz 9 wieder in die gewünschte Position verschwenkt werden. Damit ein Wiedereinkuppeln durch eine Drehbewegung in beide Richtungen möglich ist, sollte bevorzugt zu beiden Seiten des Schwenkmotors 7 je ein Anschlag 21 vorgesehen sein.

## Patentansprüche

1. Erntemaschine, insbesondere selbstfahrender Feldhäcksler zum Aufnehmen und Häckseln von Mais, Anwelkgras, Grünfutter und dergleichen Erntegut, mit einer Einzugeinrichtung (1) für die Aufnahme des Ernteguts und einem gegenüber einem feststehenden Auswurfkanalabschnitt (6) über ein schachtseitiges Antriebselement (9) motorisch verschwenkbaren, mittels einer Überlastkupplung auskuppelbaren Auswurfschacht (2) zur Übergabe des Ernteguts in einen Laderaum (3), **dadurch gekennzeichnet, daß** die Überlastkupplung zwischen dem schachtseitigen Antriebselement (9) und dem Auswurfschacht (2) angeordnet ist.

2. Erntemaschine nach Anspruch 1, **dadurch gekennzeichnet, daß** die Überlastkupplung als Kupplungsglieder schachtseitige und antriebselementseitige Rastglieder (10, 11) aufweist, die gegeneinander gefedert vorgespannt sind.

3. Erntemaschine nach Anspruch 2, **dadurch gekennzeichnet, daß** eines der Rastglieder (10) einen Rastvorsprung (12) und das andere Rastglied (11) eine Rastausnehmung (13) aufweist.

4. Erntemaschine nach Anspruch 3, **dadurch gekennzeichnet, daß** das die Rastausnehmung (13) aufweisende Rastglied (11) zu beiden Seiten der Rastausnehmung (13) geneigte Aufgleitrampen (17) für den Rastvorsprung (12) aufweist.

5. Erntemaschine nach Anspruch 4, **dadurch gekennzeichnet, daß** jede Aufgleitrampe (17) zumindest zwei Bereiche (18,19) mit verschiedenen Neigungswinkeln aufweist.

6. Erntemaschine nach Anspruch 5, **dadurch gekennzeichnet, daß** zwischen den beiden Bereichen (18,19) mit verschiedenen Neigungswinkeln ein Mitnahmevorsprung (20) angeordnet ist.

7. Erntemaschine nach einem der Ansprüche 2 bis 6, **gekennzeichnet durch** zumindest einen Anschlag (21) für das schachtseitige Rastglied (10).

8. Erntemaschine nach einem der Ansprüche 2 bis 7, **dadurch gekennzeichnet, daß** das schachtseitige Rastglied (10) mit dem Auswurfschacht (2) über ein Befestigungselement (14) verbunden ist, das gleichzeitig eine Abstützung (15) für den oberen Bereich des Auswurfschachts (2) trägt.

## Claims

1. Harvester, in particular a self-propelled forage harvester for receiving and chopping maize, wilted grass, green forage and similar harvested crop, with a feed-in device (1) for receiving the harvested crop and an ejection shaft (2), opposite a fixed ejection channel section (6), that can be motor swivelled by means of a drive element (9) on the shaft side and can be uncoupled by means of an overload coupling, for transferring the harvested crop to a loading space (3), **characterised in that** the overload coupling is arranged between the drive element (9) on the shaft side and the ejection shaft (2).

2. Harvester according to claim 1, **characterised in that** the overload coupling exhibits as coupling elements engaging elements (10, 11), on the shaft and drive element side, which are spring pre-tensioned against each other.

3. Harvester according to claim 2, **characterised in that** one of the engaging elements (10) exhibits an engaging projection (12) and the other engaging element (11) exhibits an engaging recess (13).

4. Harvester according to claim 3, **characterised in that** the engaging element (11) exhibiting the engaging recess (13) exhibits inclined sliding ramps (17) for the engaging projection (12) on both sides of the engaging recess (13).

5. Harvester according to claim 4, **characterised in that** each sliding ramp (17) exhibits at least two areas (18, 19) with different angles of inclination.

6. Harvester according to claim 5, **characterised in that** a carrier projection (20) is arranged between the two areas (18, 19) with different angles of inclination.

7. Harvester according to one of claims 2 to 6, **characterised by** at least one stop (21) for the engaging element (10) on the shaft side.

8. Harvester according to one of claims 2 to 7, **characterised in that** the engaging element (10) on the shaft side is connected to an ejection shaft (2) by a fastening element (14) which at the same time bears a support (15) for the upper area of the ejection shaft (2).

## Revendications

1. Moissonneuse, en particulier faucheuse-hacheuse automotrice pour ramasser et hacher du maïs, de l'herbe préfanée, du fourrage vert et des récoltes similaires, comportant un dispositif d'alimentation (1) destiné à ramasser la récolte et un conduit d'éjection (2) destiné à transférer la récolte dans un espace de chargement (3), ledit conduit pouvant être désaccouplé au moyen d'un accouplement de surcharge et pivoter sous l'action d'un moteur par rapport à un tronçon de canal d'éjection (6) fixe, par l'intermédiaire d'un élément d'entraînement (9) du côté du conduit d'éjection, **caractérisée en ce que** l'accouplement de surcharge est disposé entre l'élément d'entraînement (9) du côté du conduit d'éjection et le conduit d'éjection (2).

2. Moissonneuse selon la revendication 1, **caractérisée en ce que** l'accouplement de surcharge présente, en tant qu'éléments d'accouplement, des éléments d'encliquetage (10, 11) du côté du conduit d'éjection et du côté de l'élément d'entraînement, lesquels éléments sont précontraints l'un contre l'autre sous l'action d'un ressort.

3. Moissonneuse selon la revendication 2, **caractérisée en ce qu'**un des éléments d'encliquetage (10) présente une saillie d'encliquetage (12) et l'autre élément d'encliquetage (11) un évidement d'encliquetage (13).

4. Moissonneuse selon la revendication 3, **caractérisée en ce que** l'élément d'encliquetage (11) présentant l' évidement d'encliquetage (13) présente des rampes de glissement (17) inclinées des deux côtés de l'évidement d'encliquetage (13), destinées à la saillie d'encliquetage (12).

5. Moissonneuse selon la revendication 4, **caractérisée en ce que** chacune des rampes de glissement (17) présente au moins deux zones (18, 19) avec des angles d'inclinaison différents.

6. Moissonneuse selon la revendication 5, **caractérisée en ce qu'**une saillie d'entraînement (20) est disposée entre les deux zones (18, 19) avec des angles d'inclinaison différents.

7. Moissonneuse selon l'une quelconque des revendications 2 à 6, **caractérisée par** au moins une butée (21) destinée à l'élément d'encliquetage (10) du côté du conduit d'éjection.

8. Moissonneuse selon l'une quelconque des revendications 2 à 7, **caractérisée en ce que** l'élément d'encliquetage (10) du côté du conduit d'éjection est relié au conduit d'éjection (2) par un élément de fixation (14), lequel porte en même temps un support (15) destiné à la partie supérieure du conduit d'éjection (2).
